Europäisches Patentamt

European Patent Office

Office européen des brevets

(19)

(11) **EP 0 721 685 B1**

(12) **EUROPÄISCHE PATENTSCHRIFT**

(45) Veröffentlichungstag und Bekanntmachung des Hinweises auf die Patenterteilung:
**16.04.1997 Patentblatt 1997/16**

(21) Anmeldenummer: **94928277.6**

(22) Anmeldetag: **20.09.1994**

(51) Int Cl.$^6$: **H02H 1/00**, H02H 7/26

(86) Internationale Anmeldenummer:
**PCT/DE94/01151**

(87) Internationale Veröffentlichungsnummer:
**WO 95/09465 (06.04.1995 Gazette 1995/15)**

(54) **VERFAHREN ZUM ERZEUGEN EINES DIE RICHTUNG EINES KURZSCHLUSSSTROMES ANGEBENDEN RICHTUNGSSIGNALS**

METHOD OF GENERATING A SIGNAL INDICATING THE DIRECTION OF A SHORT-CIRCUIT

PROCEDE PERMETTANT DE PRODUIRE UN SIGNAL INDIQUANT LA DIRECTION D'UN COURANT DE COURT-CIRCUIT

(84) Benannte Vertragsstaaten:
**CH DE FR GB LI SE**

(30) Priorität: **27.09.1993 DE 4333259**

(43) Veröffentlichungstag der Anmeldung:
**17.07.1996 Patentblatt 1996/29**

(73) Patentinhaber: **SIEMENS AKTIENGESELLSCHAFT**
**80333 München (DE)**

(72) Erfinder: **DALSTEIN, Thomas**
**D-12099 Berlin (DE)**

(56) Entgegenhaltungen:
- **PROCEEDINGS OF CANADIAN CONFERENCE ON ELECTRICAL AND COMPUTER ENGINEERING, Bd.1, 17. September 1993, VANCOUVER CA Seiten 205 - 208 SIDHU 'An artificial neural network based directional discriminator for protecting transmission lines'**
- **IEEE TRANSACTIONS ON POWER SYSTEMS, Bd.7, Nr.2, Mai 1992, NEW YORK US Seiten 812 - 819 KANDIL 'Fault identification in an ac-dc transmission system using neural networks'**
- **PROCEEDINGS OF THE 27TH INTERSOCIETY ENERGY CONVERSION ENGINEERING CONFERENCE, Bd.1, August 1992, SAN DIEGO US Seiten 1191 - 1196 FERNANDO 'High impedance fault detection using artificial neural network techniques'**

**Beschreibung**

Die Erfindung bezieht sich auf ein Verfahren zum Erzeugen eines die Richtung eines Kurzschlußstromes in bezug auf eine Erfassungsstelle auf einer zu überwachenden elektrischen Energieübertragungsleitung angebenden Richtungssignals, bei dem aus Phasenströmen und Phasenspannungen der zu überwachenden Energieversorgungsleitung abgeleitete Strom- und Spannungssignale zum Bilden des Richtungssignals herangezogen werden, wobei jedes abgeleitete Strom- und Spannungssignal unter Gewinnung verschiedener Reihen normierter Abtastwerte für jede Phase jeweils für sich abgetastet und normiert wird und bei dem eine Beaufschlagung eines neuronalen Netzes erfolgt, das aus einer Eingangsschicht mit Eingangsneurcnen, einer Zwischenschicht und einer Ausgangsschicht mit einem Ausgangsneuron besteht und das durch Simulation verschiedener Kurzschlüsse an verschiedenen Kurzschlußorten der zu überwachenden Energieversorgungsleitung überwacht derart angelernt ist, daß das Signal des Ausgangsneurons bei einem Kurzschluß in einer Richtung einen vorgegebenen Wert und bei einem Kurzschluß in der anderen Richtung einen anderen vorgegebenen Wert annimmt.

Ein Verfahren dieser Art läßt sich der Veröffentlichung "An Artificial Neural Network based Directional Discriminator for Protecting Transmission Lines"in "Proc. of Canadian Conference on Electrical and Computer Engineering", 1993, Vol.1, Seiten 205 bis 208 entnehmen. Bei diesem bekannten Verfahren wird ein neuronales Netz in seiner Eingangsschicht mit Abtastwerten beaufschlagt, die aus von Strömen und Spannungen einer zu überwachenden Energieversorgungsleitung abgeleiteten Strom- und Spannungssignalen gebildet sind. Damit das neuronale Netz die Richtung eines Kurzschlußstromes erkennen kann, ist es vorher mit entsprechenden Abtastwerten angelernt worden. Ein derart angelerntes neuronales Netz ist in der Lage, unmittelbar nach dem Auftreten eines Kurzschlusses mit etwa zehn Abtastwerten eine Richtungsbestimmung vorzunehmen.

Ausgehend von dem bekannten Verfahren wird gemäß der Erfindung zu jedem aktuellen Abtastwert jeweils ein Anrege-Bezugswert gebildet, der bis zur Anregung aus unmittelbar vorangehenden Abtastwerten und im Anregefalle unter Hinzuziehung nacheinander erzeugter Anrege-Bezugswerte ermittelt wird, und im Anregefalle wird von den aktuellen Abtastwerten der verschiedenen Reihen jeweils der diesem Abtastwert zeitlich zugeordnete Anrege-Bezugswerte subtrahiert und somit je eine Serie von Subtraktionswerten pro Phase gebildet; die Subtraktionswerte aller Serien werden gleichzeitig an verschiedene Eingangsneuronen des neuronalen Netzes angelegt, das eine zweite Zwischenschicht aufweist und das durch Simulation verschiedener Kurzschlüsse an verschiedenen Kurzschlußorten der zu überwachenden Energieversorgungsleitung überwacht derart angelernt ist, daß das Signal des Ausgangsneurons bei einem Kurzschluß in einer Richtung einen vorgegebenen oberen Schwellwert überschreitet und bei einem Kurzschluß in der anderen Richtung einen vorgegebenen unteren Schwellwert unterschreitet; das Signal des Ausgangsneurons wird auf seine Größe untersucht, und bei Erreichen eines Schwellwertes wird das Richtungssignal erzeugt.

Ein Vorteil des erfindungsgemäßen Verfahrens besteht darin, daß nach Anregung den Eingangsneuronen des neuronalen Netzes die in der oben beschriebenen Weise gebildeten Subtraktionswerte zugeführt werden, die schließlich nur noch mit Anrege-Bezugswerten erzeugt sind, die aus nacheinander gebildeten Anrege-Bezugswerten ermittelt sind.

Eine vorteilhafte Ausgestaltung des erfindungsgemäßen Verfahrens sieht vor, daß zum Erfassen eines Kurzschlusses zwischen der zu überwachenden Energieübertragungsleitung und einer parallel dazu verlaufenden weiteren Energieübertragungsleitung ein neuronales Netz verwendet wird, bei dem durch Simulation von Kurzschlüssen an verschiedenen Kurzschlußorten zwischen den beiden Energieübertragungsleitungen ein ergänzendes Anlernen derart erfolgt ist, daß das Signal des Ausgangsneurons bei Kurzschlüssen dieser Art einen vorgegebenen Zwischenwert zwischen dem oberen und dem unteren Schwellwert annimmt. Bei einem Signal des Ausgangsneurons in der Größe des Zwischenwertes wird ein einen Kurzschluß zwischen den Energieübertragungsleitungen angebendes parallelfehlersignal erzeugt. Die Größe des Parallelsignals gibt tendenziell die Richtung des Parallelfehlers in bezug auf die Erfassungsstelle an.

Das Erfassen derartiger Kurzschlüsse ist mit bekannten Verfahren bzw. Schaltungsanordnungen zum Erzeugen eines Richtungssignals überhaupt nicht möglich, so daß mit dieser Ausgestaltung des erfindungsgemäßen Verfahrens erstmalig die Möglichkeit geschaffen ist, in beiden Richtungen von der Erfassungsstelle aus betrachtet, Kurzschlüsse dieser Art zu ermitteln.

Bei dem erfindungsgemäßen Verfahren können Anrege-Bezugswerte verwendet werden, die auf unterschiedliche Weise im Falle eines Kurzschlusses erzeugt sind. Beispielsweise können Anrege-Bezugswerte benutzt werden, die durch ein Überstromrelais in elektronischer Ausführung gewonnen sind, sofern dieses einen stromproportionalen Meßwert liefert. Zur Erzielung eines mit besonders großer Genauigkeit bzw. zuverlässigkeit arbeitenden verfahrens wird es jedoch gemäß der vorliegenden Erfindung als vorteilhaft angesehen, wenn zur Erzeugung von Anrege-Bezugswerten zur Bildung von Subtraktionswerten aus den abgeleiteten Stromsignalen eine Anregeeinrichtung verwendet wird, in der jedem Phasenleiter der zu überwachenden Energieversorgungsleitung ein Anrege-Neuralnetz mit jeweils einer Eingangs-, einer Zwischen- und einer Ausgangsschicht mit einem Ausgangsneuron zugeordnet ist, wobei jedes Anrege-Neuralnetz ein durch Simulation der Ströme bei verschiedenen Last zuständen des zu überwachenden Energieversorgungsleitung überwacht angelerntes Anrege-Verhalten aufweist; gleichzeitig werden an die verschiedenen Neuronen der Eingangsschicht jedes Anrege-Neuralnetzes aufeinanderfolgend abgetastete, normierte Werte des Stromes in dem jeweils zugeordneten Phasenleiter der Energieversorgungsleitung angelegt, und ein nachfolgend abgetasteter, normierter Wert des Stromes in dem jeweils zugeordneten Phasenleiter mit wird dem Ausgangssignal des Ausgangsneurons verglichen, und es werden als Anrege-Bezugswerte das Ausgangssignal des Ausgangsneurons, das bei einem Übersteigen des normierten Vergleichswertes des Stromes im jeweils zugeordneten Phasenleiter über das Ausgangssignal des Ausgangsneurons des entsprechenden Anrege-Neuralnetzes vorhanden ist, und die zeitgleich vorhandenen Ausgangssignale des Ausgangsneurons der anderen Anrege-Neuralnetze verwendet.

Als vorteilhaft wird es ferner angesehen, wenn zur Erzeugung von Anrege-Bezugswerten zur Bildung von Subtraktionswerten aus den abgeleiteten Spannungssignalen eine weitere Anregeeinrichtung verwendet wird, in der jedem Phasenleiter der zu überwachenden Energieversorgungsleitung ein weiteres Anrege-Neuralnetz mit jeweils einer Eingangs-, einer Zwischen- und einer Ausgangsschicht mit einem Ausgangsneuron zugeordnet ist, wobei jedes weitere Anrege-Neuralnetz ein durch Simulation der Spannungen bei verschiedenen Lastzuständen der zu überwachenden Energieversorgungsleitung überwacht angelerntes Anrege-Verhalten aufweist; gleichzeitig werden an die verschiedenen Neuronen der Eingangsschicht jedes weiteren Anrege-Neuralnetzes aufeinanderfolgend abgetastete, normierte Werte der Spannung an dem jeweils zugeordneten Phasenleiter der Energieübertragungsleitung angelegt, und ein nachfolgend abgetasteter normierter Wert der Spannung an dem jeweils zugeordneten Phasenleiter wird mit dem Ausgangssignal des Ausgangsneurons des jeweiligen weiteren Anrege-Neuralnetzes verglichen; es werden als Anrege-Bezugswerte das Ausgangssignal des Ausgangsneurons des weiteren Anrege-Neuralnetzes, das bei einem Übersteigen des normierten Vergleichwertes des Stromes im jeweils zugeordneten Phasenleiter über das Ausgangssignal des Ausgangsneurons des entsprechenden Anrege-Neuralnetzes und/oder bei einem Unterschreiten des normierten Vergleichswertes der Spannung an jeweils demselben Phasenleiter unter das Ausgangssignal des Ausgangsneurons des entsprechenden weiteren neuronalen Netzes vorhanden ist, und die zeitgleich vorhandenen Ausgangssignale des Ausgangsneurons der übrigen weiteren Anrege-Neuralnetze verwendet.

Im Hinblick auf eine vorgegebene Zuverlässigkeit des erfindungsgemäßen Verfahrens bei relativ einfachem Aufbau wird es als vorteilhaft angesehen, wenn Neuralnetze mit einer Eingangschicht mit fünf Neuronen und mit einer Zwischenschicht mit fünf Neuronen verwendet werden.

Ferner wird es als vorteilhaft angesehen, wenn ein neurales Netz mit 24 Eingangsneuronen, einer ersten Zwischenschicht mit 20 Neuronen und einer zweiten Zwischenschicht mit 12 Neuronen verwendet wird. Dadurch läßt sich einerseits der Aufwand für das Anlernen und andererseits der Zeitaufwand für die Durchführung des erfindungsgemäßen Verfahrens optimal gestalten.

Zur Erläuterung der Erfindung ist in

Figur 1 eine Anordnung zur Gewinnung eines Anrege-Bezugswertes und zur Gewinnung von Subtraktionswerten einer Serie und in

Figur 2 ein mit den Serien von Subtraktionswerten beaufschlagtes neuronales Netz zur Gewinnung eines Richtungssignals dargestellt.

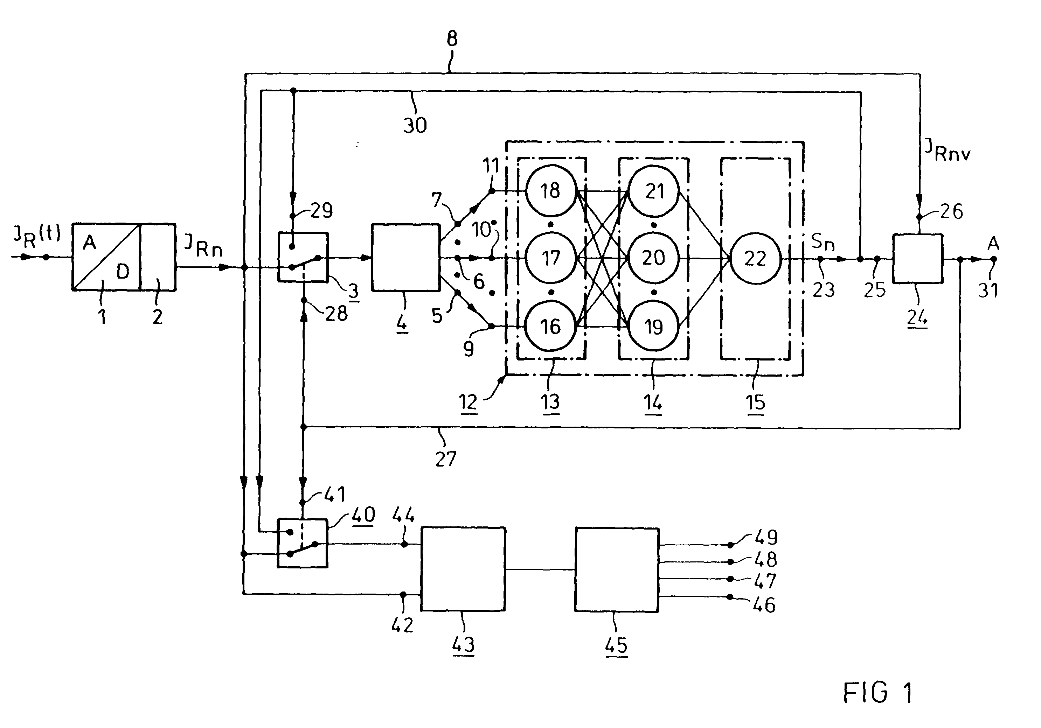

Der in Figur 1 dargestellten Anordnung ist eingangsseitig ein Strom $J_R(t)$ zugeführt, der als abgeleitetes Stromsignal dem Strom in dem Phasenleiter R einer nicht dargestellten, zu überwachenden Energieversorgungsleitung proportional ist. Das Stromsignal $J_R(t)$ wird in einem Analog-Digital-Wandler 1 abgetastet; die abgetasteten Stromwerte werden in digitale Werte umgewandelt. In einem nachgeordneten Normierungs-Baustein 2 werden die abgetasteten Stromwerte in normierte Werte $J_{Rn}(t)$ des Stromes umgesetzt. Die abgetasteten normierten Werte $J_{Rn}(t)$ werden über einen elektronischen Umschalter 3 einem diesem nachgeordneten Multiplexer 4 zugeführt, der fünf Ausgänge aufweist, von denen die Ausgänge 5, 6 und 7 dargestellt sind. Dabei ist der Multiplexer 4 mit derartigen verzögerungsgliedern ausgestattet, daß an seinen Ausgängen 5 bis 7 die abgetasteten Werte $J_{Rn}(t)$ des Stromes gleichzeitig auftreten, wobei das gleichzeitige Auftreten der unterschiedlich verzögerten Werte an den Ausgängen 5 bis 7 gleichzeitig mit der Abgabe eines weiteren abgetasteten Wertes $J_{Rn}$ vom Normierungs-Baustein 2 über eine Leitung 8 erfolgt.

Mit den Ausgängen 5 bis 7 des Multiplexers 4 sind fünf Eingänge 9, 10 und 11 (nur drei Eingänge sind gezeigt) eines Neuronalnetzes 12 verbunden, das aus einer Eingangsschicht 13, einer Zwischenschicht 14 und einer Ausgangsschicht 15 besteht. Das Neuronalnetz 12 weist in seiner Eingangsschicht 13 fünf Neuronen auf, von denen drei Neuronen 16, 17 und 18 dargestellt sind; die Zwischenschicht 14 enthält ebenfalls fünf Neuronen, von denen drei Neuronen 19, 20 und 21 gezeigt sind, während die Ausgangsschicht 15 nur mit einem einzigen Neuron (Ausgangsneuron 22) versehen ist. Das Neuronalnetz 12 ist im vorliegenden Falle nach dem Backpropagation-Algorithmus von Rumelhart auf ein vorgegebenes Anregeverhalten angelernt, wobei die Ströme $J_R(t)$ bei den verschiedenen Last- und Fehlerzuständen durch Simulation mit einem dem zu überwachenden Energieversorgungsnetz entsprechenden Netzmodell erzeugt werden. Im vorliegenden Fall wurde das Netzmodell NETOMAC benutzt, das in "Elektrizitätswirtschaft", 1979, Heft 1, Seiten 18 bis 23, im einzelnen beschrieben ist.

Einem Ausgang 23 der Ausgangsschicht 15 bzw. des Neuronalnetzes 12 ist ein Vergleicher 24 nachgeordnet, der an seinem einen Eingang 25 mit dem Ausgangssignal des Ausgangsneurons 22 beaufschlagt ist. An einen weiteren Eingang 26 des Vergleichers 24 ist über die Leitung 8 der Ausgang des Normierungsbausteins 2 unmittelbar angeschlossen, so daß dem Vergleicher 24 über den Eingang 26 ein abgetasteter, normierter Wert $I_{Rnv}$ als Vergleichswert des Stromes $J_R(t)$ zugeführt wird, der zeitlich auf den letzten dem Multiplexer zugeführten, abgetasteten, normierten Wert folgt.

Wie Figur 1 ferner erkennen läßt, ist der Ausgang des Vergleichers 24 über eine Steuerleitung 27 auch mit einem Steuereingang 28 des elektronischen Schalters 3 verbunden; ein Signaleingang 29 des Schalters 3 ist mit dem Ausgangsneuron 22 über eine Signalleitung 30 verbunden.

Die in Figur 1 dargestellte Anordnung arbeitet in der Weise, daß das Stromsignal $J_R(t)$ im Analog-Digital-Umsetzer 1 abgetastet und die abgetasteten Werte in digitale Werte umgesetzt werden. Diese werden in dem nachgeordneten Normierungsbeistein 2 normiert und als abgetastete, normierte Werte $J_{Rn}(t)$ über den freigegebenen Schalter 3 auf den Multiplexer 4 übertragen. Dieser Multiplexer 4 gibt die nacheinander abgetasteten, normierten Werte $I_{Rn}(t)$ des Stromes $J_R(t)$ aufgrund der internen Verzögerungsglieder über seine Ausgänge 5 bis 7 und die Eingänge 9 bis 11 auf das Neuronalnetz 12, das daraufhin an seinem Ausgang 23 ein entsprechendes normiertes Ausgangssignal $S_n$ erzeugt. Der nach den fünf abgetasteten, normierten Werten des Stromsignals $J_R(t)$ erzeugte weitere abgetastete normierte Wert des Stromes wird ebenfalls gleichzeitig als der Vergleichswert $J_{Rnv}$ über die Leitung 8 und den Eingang 26 auf den Vergleicher 24 gegeben, in dem der Vergleichswert $J_{Rnv}$ mit dem Ausgangssignal $S_n$ des Neuronalnetzes 12 verglichen wird. Übersteigt der normierte Vergleichswert $J_{Rnv}$ das Ausgangssignal $S_n$ des Neuronalnetzes 12, dann wird am Ausgang 31 des Vergleichers 24 ein Anregesignal A erzeugt.

Die Ströme in den weiteren Phasenleitern der zu überwachenden Energieversorgungsleitung werden in entsprechender Weise erfaßt. Dazu dient jeweils eine Anordnung, die der nach Figur 1 entspricht, so daß ggf. an den Ausgängen dieser weiteren Anordnungen entsprechende Anregesignale gebildet werden. Diese Anregesignale können zur Erzeugung einer General-Anregung mittels OR-Gliedern ausgewertet werden. Das Ausgangssignal der General-Anregung stellt dann ein Anrege-Signal für die zugeordnete Selektiv-Schutzanordnung dar, bei der es sich beispielsweise um eine Distanzschutz-Anordnung handeln kann.

Ist ein Anregesignal A am Ausgang 31 erzeugt, dann wird über die Steuerleitung 27 der elektronische Schalter 3 umgeschaltet und dadurch der Ausgang bzw. das Ausgangssignal $S_n$ des Ausgangsneurons 22 auf den Eingang des Multiplexers 4 geschaltet. Der Multiplexer 4 schaltet das Ausgangssignal $S_n$ und noch zwei der drei früher bereits abgetasteten Werte auf das Neuronalnetz 12. Der Vorgang wiederholt sich noch zweimal, bis schließlich nur noch (nacheinander erzeugte) Ausgangssignale $S_n$ vom Multiplexer 4 verarbeitet und weitergegeben werden. Für die unten näher beschriebene eigentliche Richtungsbestimmung des Fehlers in der Energieversorgungsleitung ist dies von Bedeutung.

Wie Figur 1 ferner zu entnehmen ist, sind die abgetasteten, normierten Werte $J_{Rn}$ des Stromsignals $J_{R(t)}$ auch an einen weiteren elektronischen Schalter 40 gelegt, dessen Steuereingang 41 mit dem Anrege-Signal A am Ausgang 31 beaufschlagt ist. Dem weiteren elektronischen Schalter 40 ist ein Differenzbildner 43 nachgeordnet, der mit seinem einen Eingang 42 mit dem Normierungsbaustein 2 und mit seinem anderen Eingang 44 mit dem Ausgang des weiteren elektronischen Schalters 40 verbunden ist und daher nach dem Auftreten eines Anregesignals A mit dem Ausgangssignal $S_n$ des Anrege-Neuronalnetzes 12 beaufschlagt ist. Im Differenzbildner 43 werden die aktuellen Subtraktionswerte ermittelt, indem von jedem abgetasteten, normierten Werte $J_{Rn}$ das jeweils aktuelle Ausgangssignal $S_n$ subtrahiert wird. Ausgangsseitig ist an den Differenzbildnern 43 ein weiterer Multiplexer 45 mit verzögerungsgliedern angeschlossen, der mit Ausgängen 46, 47, 48 und 49 versehen ist. Ist kein Anregesignal A vorhanden, dann liegen an den Eingängen 42 und 44 das Differenzbildners 43 die abgetasteten, normierten Werte $J_{Rn}$.

Die Anordnung nach Figur 1 arbeitet hinsichtlich der zuletzt beschriebenen Komponenten in der Weise, daß nach Auftreten eines Anrege-Signals A über den Eingang 41 der weitere elektronische Schalter 40 betätigt wird, woraufhin das Ausgangssignal $S_n$ und danach gebildete weitere Ausgangssignale $S_{n1}$ bis $S_{n3}$ nacheinander dem Differenzbildner 43 zugeführt werden. Der Differenzbildner 43 erzeugt eine Serie $Si_R$ von Subtraktionswerten

$$\Delta i_R(t) = J_{Rn1} - S_n$$

$$\Delta i_R(t-1) = J_{Rn2} - S_{n1}$$

$$\Delta i_R(t-2) = J_{Rn3} - S_{n2}$$

$$\Delta i_R(t-3) = J_{Rn4} - S_{n3}$$

Diese Serie $Si_R$ ist dem abgeleiteten Stromsignal $J_R(t)$ zugeordnet.

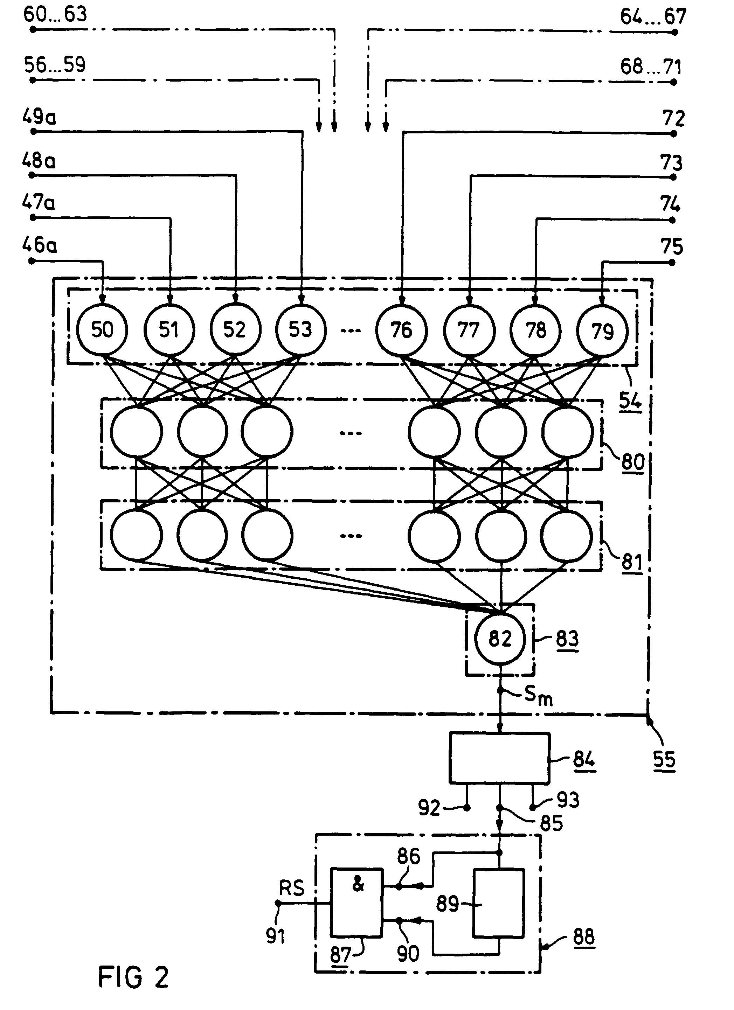

Diese Serie $Si_R$ von Subtraktionswerte $\Delta i_R(t)$ bis $\Delta i_R(t-3)$ wird über die Ausgänge 46 bis 49 des Multiplexers 45 gleichzeitig an Eingänge 46a, 47a, 48a und 49a von vier Eingangsneuronen 50, 51, 52 und 53 einer Eingangsschicht 54 eines neuronalen Netzes 55 angelegt (vgl. Figur 2). Jeweils vier - nicht dargestellte - weitere Eingangsneuronen der Eingangsschicht 54 sind über ihre in der Figur 2 nur schematisch in Form eines einzigen Einganges dargestellten Eingänge 56 bis 59 und 60 bis 63 jeweils an Ausgänge weiterer Multiplexer entsprechend dem weiteren Multiplexer 45 gemäß Figur 1 angeschlossen. Es kann somit eine aus einem weiteren abgeleiteten Stromsignal $J_S(t)$, das dem Phasenstrom in der Phase S der zu überwachenden Energieversorgungsleitung entspricht, nach der oben angegebenen Vorschrift gebildete Serie $S_{iS}$ von Subtraktionswerten verarbeitet werden. Entsprechendes gilt für eine weitere Serie $S_{iT}$ von Subtraktions-werten entsprechend einem Strom $J_T(t)$.

Entsprechendes gilt hinsichtlich der Phasenspannungen an der zu überwachenden Energieversorgungsleitung, indem über einen in Figur 2 ebenfalls nur symbolisch eingezeichneten Eingang 64 bis 67 dem neuronalen Netz 55 Subraktionswerte einer Serie $S_{uT}$ zugeführt werden, die unter Benutzung von einem aus der Spannung an der Phase T abgeleiteten Spannungssignal gebildet ist. An weiteren Eingängen 68 bis 71 liegt eine Serie $S_{uS}$ von Subtraktionswerten, die aus einem aus der Spannung an der Phase S abgeleiteten Spannungssignal erzeugt sind. An zusätzlichen Eingängen 72, 73, 74 und 75 liegen Subtraktionswerte einer Serie $S_{uR}$, die ebenfalls mit einer Anordnung entsprechend der nach Figur 1 gebildet ist, wenn eingangsseitig an eine derartige Anordnung die Spannung an der Phase R angelegt ist.

Die Eingangsschicht des neuronalen Netzes 55 besteht also bei dem Ausführungsbeispiel nach Figur 2 aus insgesamt 24 Eingangsneuronen, von denen die letzten vier Neuronen 76, 77, 78 und 79 mit den Eingängen 72 bis 75 verbunden sind.

Neben der Eingangsschicht 54 enthält das neuronale Netz 55 eine erste Zwischenschicht 80 mit 20 Neuronen und eine weitere Zwischenschicht 81 mit 12 Neuronen, wobei die Neuronen jeder Zwischenschicht mit allen Eingangsneuronen bzw. mit allen Neuronen der folgenden Zwischenschicht verbunden sind; dagegen stehen alle Neuronen der zweiten Zwischenschicht 81 mit einem einzigen Ausgangsneuron 82 der Ausgangsschicht 83 in Verbindung.

Das neuronale Netz 55 ist durch Simulation verschiedener Last zustände bei verschiedenen Kurzschlußfällen überwacht so angelernt, daß bei einem Kurzschluß in einer Richtung von der Erfassungsstelle (vorwärtsrichtung) das Signal $S_m$ am Ausgang des Ausgangsneuronens 82 den normierten Wert 0,8 überschreitet. Bei einem Kurzschluß in der anderen Richtung von der Erfassungsstelle aus betrachtet, also in Rückwärtsrichtung, unterschreitet das Ausgangssignal $S_m$ aufgrund des entsprechenden Lernvorganges den normierten Wert 0,2.

Das neuronale Netz kann ebenfalls mit dem oben beeits erwähnten Netzmodell "NETOMAC" in der oben ebenfalls bereits angesprochenen Weise überwacht angelernt sein.

Dem neuronalen Netz 55 ist eine Vergleicherstufe 84 nachgeordnet, die auf einen ersten oberen Schwellwert von 0,8 und auf einen unteren Schwellwert von 0,2 eingestellt ist. Nimmt das Ausgangssignal $S_m$ einen Wert größer als 0,8 an (Fehler in Vorwärtsrichtung), dann tritt an einem Ausgang 85 der Vergleicherstufe 84 ein Signal auf, das einerseits direkt einem Eingang 86 eines UND-Gliedes 87 einer Auswerteeinrichtung 88 zugeführt wird und andererseits über ein Verzögerungsglied 89 mit einer Verzögerung von der Länge eines Abtastschrittes einem weiteren Eingang 90 des UND-Gliedes 87 zugeführt wird. Dies führt dazu, daß erst nach zwei aufeinanderfolgenden Signalen am Ausgang 85 der Vergleicherstufe 84 am Ausgang 91 des UND-Gliedes 87 ein Richtungssignal RS auftritt, das einen Kurzschluß in vorwärtsrichtung anzeigt; dadurch ist eine erhöhte Sicherheit für diese Aussage erreicht.

Nimmt das Ausgangssignal $S_m$ des Ausgangsneurons 82 des Neuronalen Netzes 55 einen Wert kleiner als 0,2 an, dann tritt an einem weiteren Ausgang 92 ein Signal auf, das einen Fehler in Rückwärtsrichtung signalisiert. Über eine Auswerteeinrichtung entsprechend der Einrichtung 88 wird dann nach Auftreten von zwei derartigen Signalen ein einen Fehler in Rückwärtsrichtung anzeigendes weiteres Richtungssignal abgegeben.

Wie Figur 2 ferner erkennen läßt, weist die Vergleicherstufe 84 eine weiteren Ausgang 93 auf, der zur Erzeugung eines Parallelfehlersignales dient. Dieses Parallelfehlersignal kennzeichnet einen Kurzschluß zwischen zwei parallel zueinander geführten Energieübertragungsleitungen und wird dann hervorgerufen, wenn die Vergleicherstufe 84 ein Ausgangssignal $S_m$ des Ausgangsneurons 82 feststellt, das einen Wert um 0,5 aufweist. Liegt der Parallelfehler in Vorwärtsrichtung, dann ist der Zwischenwert größer als 0,5; bei einem solchen Fehler in Rückwärtsrichtung ist der Zwischenwert kleiner als 0,5.

**Patentansprüche**

1. Verfahren zum Erzeugen eines die Richtung eines Kurzschlußstromes in bezug auf eine Erfassungsstelle auf einer zu überwachenden elektrischen Energieübertragungsleitung angebenden Richtungssignals (RS), bei dem

   - aus Phasenströmen und Phasenspannungen der zu überwachenden Energieversorgungsleitung abgeleitete Strom- und Spannungssignale ($J_R(t)$) zum Bilden des Richtungssignals herangezogen werden, wobei jedes abgeleitete Strom- und Spannungssignal ($J_R(t)$) unter Gewinnung verschiedener Reihen normierter Abtastwerte ($J_{Rn}$) für jede Phase jeweils für sich abgetastet und normiert wird und bei dem

- eine Beaufschlagung eines neuronalen Netzes erfolgt, das aus einer Eingangsschicht (54) mit Eingangsneuronen (50... 53, 76...79), einer Zwischenschicht (80) und einer Ausgangsschicht (83) mit einem Ausgangsneuron (82) besteht und das durch Simulation verschiedener Kurzschlüsse an verschiedenen Kurzschlußorten der zu überwachenden Energieversorgungsleitung überwacht derart angelernt ist, daß

  - das Signal ($S_m$) des Ausgangsneurons (82) bei einem Kurzschluß in einer Richtung einen vorgegebenen Wert und bei einem Kurzschluß in der anderen Richtung einen anderen vorgegebenen Wert annimmt,

**dadurch gekennzeichnet**, daß

- zu jedem aktuellen Abtastwert jeweils ein Anrege-Bezugswert ($S_n$) gebildet wird, der bis zur Anregung aus unmittelbar vorangehenden Abtastwerten ($J_{Rn}$) und im Anregefalle unter Hinzuziehung nacheinander erzeugter Anrege-Bezugswerte ermittelt wird, und daß im Anregefalle

- von den aktuellen Abtastwerten der verschiedenen Reihen jeweils der diesem Abtastwert zeitlich zugeordnete Anrege-Bezugswert ($S_n$) subtrahiert wird und somit je eine Serie von Subtraktionswerten ($\Delta i_R(t)$, $\Delta i_R(t-1)$, $\Delta i_R(t-2)$, $\Delta i_R(t-3)$) pro Phase gebildet wird,

- die Subtraktionswerte ($\Delta i_R(t)$, ...) aller Serien ($Si_R, Si_S, Si_T, Su_R, Su_S, Su_T$) gleichzeitig an verschiedene Eingangsneuronen (50...53, 76...79) des neuronalen Netzes (55) angelegt werden,

- das eine zweite Zwischenschicht (81) aufweist und das durch Simulation verschiedener Kurzschlüsse an verschiedenen Kurzschlußorten der zu überwachenden Energieversorgungsleitung überwacht derart angelernt ist, daß

  - das Signal des Ausgangsneurons (82) bei einem Kurzschluß in einer Richtung einen vorgegebenen oberen Schwellwert (0,8) überschreitet und bei einem Kurzschluß in der anderen Richtung einen vorgegebenen unteren Schwellwert (0,2) unterschreitet, und

- das Signal($S_m$) des Ausgangsneurons (82) auf seine Größe untersucht und bei Erreichen eines Schwellwertes (0,8; 0,2) das Richtungssignal(RS) erzeugt wird.

2. Verfahren nach Anspruch 1,
   **dadurch gekennzeichnet,** daß

   - zum Erfassen eines Kurzschlusses zwischen der zu überwachenden Energieübertragungsleitung und einer parallel dazu verlaufenden weiteren Energieübertragungsleitung ein neuronales Netz verwendet wird, bei dem

     - durch Simulation von Kurzschlüssen an verschiedenen Kurzschlußorten zwischen den beiden Energieübertragungsleitungen ein ergänzendes Anlernen derart erfolgt ist, daß

       - das Ausgangssignal ($S_m$) des Ausgangsneurons (82) bei Kurzschlüssen dieser Art einen vorgegebenen Zwischenwert (0,5) zwischen dem oberen und dem unteren Schwellwert (0,8; 0,2) annimmt, und

   - bei einem Ausgangssignal ($S_m$) des Ausgangsneurons (82) in der Größe des Zwischenwertes (0,5) ein einen Kurzschluß zwischen den Energieübertragungsleitungen angebendes Parallelfehlersignal erzeugt wird.

3. Verfahren nach Anspruch 1 oder 2,
   **dadurch gekennzeichnet,** daß

   - zur Erzeugung von Anrege-Bezugswerten ($S_n$) zur Bildung von Subtraktionswerten ($\Delta i_R(t)$, $\Delta i_R(t-1)$, $\Delta i_R(t-2)$, $\Delta i_R(t-3)$) aus den abgeleiteten Stromsignalen ($J_R(t)$)

   - eine Anregeeinrichtung verwendet wird, in der jedem Phasenleiter der zu überwachenden Energieversorgungsleitung ein Anrege-Neuralnetz (12) mit jeweils einer Eingangs- (13), einer Zwischen-(14) und einer Ausgangsschicht (15) mit einem Ausgangsneuron (22) zugeordnet ist,

     - wobei jedes Anrege-Neuralnetz (12) ein durch Simulation der Ströme ($J_R(t)$) bei verschiedenen Lastzuständen der zu überwachenden Energieversorgungsleitung überwacht angelerntes Anrege-Verhalten aufweist,

   - nacheinander an die verschiedenen Neuronen (16, 17, 18) der Eingangsschicht (13) jedes Anrege-Neuralnetzes (12) aufeinanderfolgend abgetastete, normierte Werte ($J_{Rn}$) des Stromes ($J_R(t)$) in dem jeweils zugeordneten Phasenleiter der Energieversorgungsleitung angelegt werden und anschließend ein nachfolgend abgetasteter, normierter Wert ($I_{Rnv}$) des Stromes (JR(t)) in dem jeweils zugeordneten Phasenleiter mit dem Ausgangssignal ($S_n$) des Ausgangsneurons (22) verglichen wird und

- als Anrege-Bezugswerte ($S_n$) das Ausgangssignal des Ausgangsneurons, das bei einem Übersteigen des normierten Vergleichswertes ($J_{Rnv}$) des Stromes ($J_R$(t)) im jeweils zugeordneten Phasenleiter über das Ausgangssignal ($S_n$) des Ausgangsneurons (22) des entsprechenden Anrege-Neuralnetzes (12) vorhanden ist, und die zeitgleich vorhandenen Ausgangssignale des Ausgangsneurons der anderen Anrege-Neuralnetze verwendet werden.

4. Verfahren nach Anspruch 1,
   **dadurch gekennzeichnet,** daß

   - zur Erzeugung von Anrege-Bezugswerten zur Bildung von Subtraktionswerten aus den abgeleiteten Spannungssignalen eine weitere Anregeeinrichtung verwendet wird, in der jedem Phasenleiter der zu überwachenden Energieversorgungsleitung ein weiteres Anrege-Neuralnetz mit jeweils einer Eingangs-, einer Zwischen- und einer Ausgangsschicht mit einem Ausgangsneuron zugeordnet ist,

     - wobei jedes weitere Anrege-Neuralnetz ein durch Simulation der Spannungen bei verschiedenen Last zuständen der zu überwachenden Energieversorgungsleitung überwacht angelerntes Verhalten aufweist,

   - gleichzeitig an die verschiedenen Neuronen der Eingangsschicht jedes weiteren Anrege-Neuralnetzes aufeinanderfolgend abgetastete, normierte Werte der Spannung an dem jeweils zugeordneten Phasenleiter der Energieübertragungsleitung angelegt werden, und ein nachfolgend abgetasteter normierter Wert der Spannung an dem jeweils zugeordneten Phasenleiter mit dem Ausgangssignal des Ausgangsneurons des jeweiligen weiteren Anrege-Neuralnetzes verglichen wird und

   - als Anrege-Bezugswerte das Ausgangssignal des Ausgangsneurons des weiteren Anrege-Neuralnetzes, das bei einem Übersteigen des normierten Vergleichwertes ($J_{Rnv}$) des Stromes ($J_R$(t)) im jeweils zugeordneten Phasenleiter über das Ausgangssignal ($S_n$) des Ausgangsneurons (22) des entsprechenden Anrege-Neuralnetzes (12) und/oder bei einem Unterschreiten des normierten Vergleichswertes der Spannung an jeweils demselben Phasenleiter unter das Ausgangssignal des Ausgangsneurons des entsprechenden weiteren neuronalen Netzes vorhanden ist, und die zeitgleich vorhandenen Ausgangssignale des Ausgangsneurons der übrigen weiteren Anrege-Neuralnetze verwendet werden.

5. Verfahren nach Anspruch 3 oder 4,
   **dadurch gekennzeichnet,** daß

   - Neuralnetze (12) mit einer Eingangsschicht (13) mit fünf Neuronen (16, 17, 18) und mit einer Zwischenschicht (14) mit fünf Neuronen (19, 20, 21) verwendet werden.

6. Verfahren nach einem der vorangehenden Ansprüche,
   **dadurch gekennzeichnet,** daß

   - ein neurales Netz (55) mit 24 Eingangsneuronen, einer ersten Zwischenschicht (80) mit 20 Neuronen uind einer zweiten Zwischenschicht (81) mit 12 Neuronen verwendet wird.

**Claims**

1. Method for generating a directional signal (RS) which indicates the direction of a short-circuit current with respect to a detection position on an electrical power transmission line which is to be monitored, in which method

   - current signals and voltage signals ($J_R$(t)) derived from phase currents and phase voltages of the power supply line which is to be monitored are used to form the directional signal, with each derived current signal and voltage signal ($J_R$(t)), producing various rows of normalized sampled values ($J_{Rn}$), being individually sampled and normalized for each phase, and in which method

   - loading of a neuronal network takes place, which network consists of an input layer (54) having input neurons (50...53, 76...79), an intermediate layer (80) and an output layer (83) having one output neuron (82), and which network, monitored by simulation of various short-circuits at various short-circuit locations of the power supply line which is to be monitored, is trained in such a way that

   - the signal ($S_m$) of the output neuron (82) in the event of a short-circuit in one direction takes on one predetermined value and in the event of a short-circuit in the other direction takes on another predetermined value, characterised in that

   - to form each current sampled value there is formed in each case an excitation reference value ($S_n$), which up until the excitation is determined from directly preceding sampled values ($J_{Rn}$) and, in the event of excitation is determined whilst delaying successively generated excitation reference values, and in that in the event of excitation,

- there is subtracted from the current sampled values of the various rows in each case the excitation reference value ($S_n$) that is allocated with respect to time to this sampled value, and consequently a respective series of subtraction values ($\Delta i_R(t)$, $\Delta i_R(t-1)$, $\Delta i_R(t-2)$, $\Delta i_R(t-3)$) per phase is formed,
- the subtraction values ($\Delta i_R(t)$,...) of all of the series ($Si_R$, $Si_S$, $Si_T$, $Su_R$, $Su_S$, $Su_T$) are applied simultaneously to various input neurons (50... 53, 76...79) of the neuronal network (55),
- which has a second intermediate layer (81) and which, monitored by simulation of various short-circuits at various short-circuit locations of the power supply line which is to be monitored, is trained in such a way that
- the signal of the output neuron (82) in the event of a short-circuit in one direction exceeds a predetermined upper threshold value (0.8) and in the event of a short-circuit in the other direction falls below a predetermined lower threshold value (0.2), and
- the signal ($S_m$) of the output neuron (82) is tested for its magnitude, and if a threshold value (0.8; 0.2) is reached, the directional signal (RS) is generated.

2. Method according to claim 1, characterised in that

- in order to detect a short-circuit between the power transmission line which is to be monitored and a further power transmission line which extends in parallel therewith, a neuronal network is used in which
- by means of simulation of short-circuits at various short-circuit locations between the two power transmission lines, a supplementary training has taken place in such a way that
- the output signal ($S_m$) of the output neuron (82) in the event of short-circuits of this type takes on a predetermined intermediate value (0.5) between the upper threshold value (0.8) and the lower threshold value (0.2), and
- if there is an output signal ($S_m$) of the output neuron (82) that is of the magnitude of the intermediate value (0.5), a parallel fault signal, which indicates a short-circuit between the power transmission lines, is generated.

3. Method according to claim 1 or 2, characterised in that

- in order to generate excitation reference values ($S_n$) for forming subtraction values ($\Delta i_R(t)$, $\Delta i_R$

($t-1$), $\Delta i_R(t-2)$, $\Delta i_R(t-3)$) from the derived current signals ($J_R(t)$)

- an excitation device is used, in which excitation device there is allocated to each phase conductor of the power supply line which is to be monitored an excitation neuronal network (12) having in each case an input layer (13), an intermediate layer (14) and an output layer (15) having one output neuron (22),
- with each excitation neuronal network (12) having an excitation performance, which is learnt in a manner such that it is monitored by simulation of the currents ($J_R(t)$) at various load conditions of the power supply line which is to be monitored,
- successively sampled, normalized values ($J_{Rn}$) of the current ($J_R(t)$) in the respectively associated phase conductor of the power supply line are applied one after the other to the various neurons (16, 17, 18) of the input layer (13) of each excitation neuronal network (12), and after this, a subsequently sampled, normalized value ($I_{Rnv}$) of the current ($J_R(t)$) in the respectively allocated phase conductor is compared with the output signal ($S_n$) of the output neuron (22), and
- the output signal of the output neuron, which output signal is present if the normalized comparison value ($J_{Rnv}$) of the current ($J_R(t)$) in the respectively associated phase conductor exceeds the output signal ($S_n$) of the output neuron (22) of the corresponding excitation neuronal network (12), and the simultaneously present output signals of the output neuron of the other excitation neuronal network are used as excitation reference values.

4. Method according to claim 1, characterised in that

- in order to generate excitation reference values for forming subtraction values from the derived voltage signals, a further excitation device is used, in which further excitation device there is allocated to each phase conductor of the power supply line which is to be monitored a further excitation neuronal network having in each case an input layer, an intermediate layer and an output layer having one output neuron,
- with each further excitation neuronal network having a performance which is learnt in a manner such that it is monitored by simulation of the voltages at various load conditions of the power supply line which is to be monitored,
- at the same time, successively sampled, normalized values of the voltage at the respectively associated phase conductor of the power transmission line are applied to the various neurons of the input layer of each further excitation neuronal network, and a subsequently sampled normalized value of the voltage at the respectively associated phase conductor is compared with the output signal of the output neuron of the respective further excitation neuronal network, and

-    the output signal of the output neuron of the further excitation neuronal network, which output signal is present if the normalized comparison value ($J_{Rnv}$) of the current ($J_R(t)$) in the respectively associated phase conductor exceeds the output signal ($S_n$) of the output neuron (22) of the corresponding excitation neuronal network (12) and/or if the normalized comparison value of the voltage at the respective same phase conductor falls below the output signal of the output neuron of the corresponding further neuronal network, and the simultaneously present output signals of the output neuron of the other further excitation neuronal networks are used as excitation reference values.

5.   Method according to claim 3 or 4, characterised in that

-    neuronal networks (12) which have an input layer (13) having five neurons (16, 17, 18) and an intermediate layer (14) having five neurons (19, 20, 21) are used.

6.   Method according to one of the preceding claims, characterised in that

-    a neuronal network (55) which has 24 input neurons, a first intermediate layer (80) having 20 neurons and a second intermediate layer (81) having 12 neurons is used.


## Revendications

1.   Procédé de production d'un signal (RS) de sens indiquant le sens d'un courant de court-circuit par rapport à un point de détection se trouvant sur une ligne de transport d'énergie électrique qui est à contrôler, dans lequel,

-    on utilise, pour former le signal de sens, des signaux ($J_R(t)$) de courant et de tension obtenus à partir de courants et de tension de phase de la ligne d'alimentation en énergie à contrôler, chaque signal ($J_R(t)$) de courant et de tension obtenu étant échantillonné et normé en soi pour chaque phase en obtenant différentes séries de valeurs normées ($J_{Rn}$) d'échantillonnage pour chaque phase et dans lequel

-    on alimente un réseau neuronal, qui est constitué d'une couche (54) d'entrée ayant des neurones (50 à 53, 76 à 79) d'entrée, d'une couche intermédiaire (80) et d'une couche (83) de sortie ayant un neurone (82) de sortie et dont on fait l'apprentissage de manière contrôlée par simulation de différents court-circuits en différents lieux de court-circuits de la ligne d'alimentation en énergie à contrôler, de telle sorte que

-    le signal ($S_n$) du neurone (82) de sortie prenne, pour un court-circuit dans un sens, une valeur prescrite et, pour un court-circuit dans l'autre sens, une autre valeur prescrite,

caractérisé en ce que

-    on forme pour chaque valeur d'échantillonnage instantanée une valeur ($S_n$) de référence d'excitation, que l'on détermine à partir de valeurs ($J_{Rn}$) d'échantillonnage immédiatement précédentes jusqu'à l'excitation et en faisant intervenir, en cas d'excitation, les valeurs de référence d'excitation produites successivement, et, en cas d'excitation

-    on soustrait de chacune des valeurs d'échantillonnage instantanées des différentes séries la valeur ($S_n$) de référence d'excitation associée dans le temps à cette valeur d'échantillonnage et on forme ainsi pour chaque phase une série de valeurs de soustraction ($\Delta i_R(t)$, $\Delta i_R$(t-1), $\Delta i_R$(t-2), $\Delta$ iR(t-3)),

-    on applique les valeurs de soustraction ($\Delta i_R$(t), ...) de toutes les séries ($Si_R$, $Si_S$, $Si_T$, $Su_R$, $Su_S$, $Su_T$) simultanément à différents neurones d'entrée (50 à 53, 76 à 79) du réseau neuronal (55),

-    qui comporte une deuxième couche (81) intermédiaire et dont on fait l'apprentissage de manière contrôlée par simulation des différents court-circuits en différents lieux de court-circuits de la ligne d'alimentation en énergie à contrôler, de telle sorte que

-    le signal du neurone (82) de sortie soit supérieur à un seuil supérieur prescrit (0,8) lorsque le court-circuit est dans un sens et soit inférieur à un seuil inférieur prescrit (0,2) pour un court-circuit dans l'autre sens, et

-    on examine l'amplitude du signal ($S_m$) du neurone (82) de sortie et on produit le signal (RS) de sens lorsqu'un seuil (0,8 ; 0,2) est atteint.

2.   Procédé suivant la revendication 1, caractérisé en ce que

- on utilise, pour détecter un court-circuit entre la ligne de transport d'énergie à contrôler et une ligne supplémentaire de transport d'énergie s'étendant en parallèle avec celle-ci, un réseau neuronal, dans lequel

  - il s'effectue un apprentissage complémentaire par simulation de court-circuits en différents lieux de court-circuits entre les deux lignes de transport d'énergie, de telle sorte que

    - le signal ($S_m$) de sortie du neurone (82) de sortie prenne une valeur intermédiaire prescrite (0,5) comprise entre le seuil supérieur et le seuil inférieur (0,8 ; 0,2) pour des court-circuits de ce genre, et

- on produit un signal d'erreur en parallèle indiquant un court-circuit entre les lignes de transport d'énergie lorsqu'un signal ($S_m$) de sortie du neurone (82) de sortie a l'amplitude de la valeur intermédiaire (0,5).

3. Procédé suivant la revendication 1 ou 2, caractérisé en ce que

   - on utilise, pour produire des valeurs ($S_n$) de référence d'excitation pour former des valeurs de soustraction ($\Delta i_R(t)$, $\Delta i_R(t-1)$, $\Delta i_R(t-2)$, $\Delta i_R(t-3)$) à partir des signaux ($J_R(t)$) de courant obtenus,
   - un dispositif d'excitation, dans lequel il est associé à chaque conducteur de phase de la ligne d'alimentation en énergie à contrôler un réseau neuronal (12) d'excitation comportant une couche d'entrée (13), une couche (14) intermédiaire et une couche (15) de sortie ayant un neurone (22) de sortie,

     - chaque réseau neuronal (12) d'excitation ayant un comportement d'excitation acquis de manière contrôlée par simulation des courants ($J_R(t)$) pour différents états de charge de la ligne de transport d'énergie à contrôler,

   - on applique successivement aux différents neurones (16, 17, 18) de la couche (13) d'entrée de chaque réseau (12) neuronal d'excitation, des valeurs ($J_{Rn}$) normées et échantillonnées successivement du courant ($J_R(t)$) dans le conducteur de phase respectivement associé de la ligne d'alimentation en énergie et on compare ensuite une valeur ($I_{Rnv}$) normée et échantillonnée successivement du courant ($J_R(t)$) dans le conducteur de phase respectivement associé au signal ($S_n$) de sortie du neurone (22) de sortie et

- on utilise comme valeur (Sn) de référence d'excitation, le signal de sortie du neurone de sortie, qui est présent lorsque la valeur ($J_{Rnv}$) de comparaison normée du courant ($J_R(t)$) dans le conducteur de phase respectivement associé est supérieure au signal (Sn) de sortie du neurone (22) de sortie du réseau neuronal (12) d'excitation correspondant, et les signaux de sortie présents en même temps du neurone de sortie des autres réseaux neuronaux d'excitation.

4. Procédé suivant la revendication 1, caractérisé en ce que

   - on utilise, pour produire des valeurs de référence d'excitation pour former des valeurs de soustraction à partir des signaux de tension obtenus, un dispositif d'excitation supplémentaire, dans lequel il est associé à chaque conducteur de phase de la ligne d'alimentation en énergie à contrôler un réseau neuronal d'excitation supplémentaire comportant une couche d'entrée, une couche intermédiaire et une couche de sortie ayant un neurone de sortie,

     - chaque réseau neuronal d'excitation supplémentaire ayant un comportement acquis de manière contrôlée par simulation des tensions pour différents états de charge de la ligne d'alimentation en énergie à contrôler,

   - on applique simultanément aux différents neurones de la couche d'entrée de chaque réseau neuronal d'excitation supplémentaire des valeurs normées et échantillonnées successivement de la tension sur le conducteur de phase respectivement associé de la ligne de transport d'énergie et on compare une valeur normée et échantillonée successivement de la tension sur le conducteur de phase respectivement associé au signal de sortie du neurone de sortie du réseau neuronal d'excitation supplémentaire respectif et

   - on utilise, comme valeurs de référence d'excitation, le signal de sortie du neurone de sortie du réseau neuronal d'excitation supplémentaire, qui est présent lorsque la valeur de comparaison normée ($J_{Rnv}$) du courant ($J_R(t)$) dans le conducteur de phase respectivement associé est supérieure au signal ($S_n$) de sortie du neurone (22) de sortie du réseau (12) neuronal d'excitation supplémentaire et/ou lorsque la valeur de comparaison normée de la tension sur le même conducteur de phase est inférieure au signal de sortie du neurone de sortie du réseau neuronal supplémentaire correspondant, et les signaux de sortie présents en même temps du neurone de sortie des réseaux neuronaux d'excitation supplémentaire restants.

5.  Procédé suivant la revendication 3 ou 4, caractérisé en ce que

    -   on utilise des réseaux neuronaux (12) ayant une couche (13) d'entrée à cinq neurones (16, 17, 18) et ayant une couche intermédiaire (14) à cinq neurones (19, 20, 21).

6.  Procédé suivant l'une des revendications précédentes, caractérisé en ce que

    -   on utilise un réseau neuronal (55) ayant 24 neurones d'entrée, une première couche intermédiaire (80) à 20 neurones et une deuxième couche intermédiaire (81) à 12 neurones.

FIG 1

EP 0 721 685 B1

FIG 2